# EUROPEAN PATENT APPLICATION

(11) **EP 4 376 465 A1**
(43) Date of publication of application: **29.05.2024**
(21) Application number: 22845432.8
(22) Date of filing: 22.07.2022
(51) Int. Cl.: H04W 24/00

(54) **SENSING METHOD AND APPARATUS, AND NETWORK DEVICE**

(30) Priority: 23.07.2021 CN 202110839586
(71) Applicant: Vivo Mobile Communication Co., Ltd., Dongguan, Guangdong 523863 (CN)
(72) Inventor: JIANG, Dajie, Dongguan, Guangdong 523863 (CN); YAO, Jian, Dongguan, Guangdong 523863 (CN); SI, Ye, Dongguan, Guangdong 523863 (CN); PAN, Xiang, Dongguan, Guangdong 523863 (CN); QIN, Fei, Dongguan, Guangdong 523863 (CN)
(74) Representative: Lavoix
(86) International application number: PCT/CN2022/107296
(87) International publication number: WO 2023/001269

(57) **Abstract**

This application discloses a sensing method, an apparatus, and a network device, and pertains to the technical field of communication. The sensing method of the embodiments of this application includes: sending, by a first network device, a sensing signal; and detecting, by the first network device, an echo of the sensing signal based on a measurement quantity of the sensing signal, and obtaining a measurement value corresponding to the measurement quantity.

## Description

### CROSS-REFERENCE TO RELATED APPLICATIONS

This application claims priority to Chinese Patent Application No. 202110839586.0, filed in China on July 23, 2021, which is incorporated herein by reference in its entirety.

### TECHNICAL FIELD

This application pertains to the field of communication, and particularly relates to a sensing method, an apparatus, and a network device.

### BACKGROUND

A future mobile communication system such as a B5G system or a 6G system has a sensing capability in addition to a communication capability. The sensing capability means that one or more devices with a sensing capability can, by sending and receiving radio signals, perceive an orientation, a distance, a velocity, and other information of a target object, or perform an operation such as detection, tracking, recognition, or imaging on a target object, event, environment, or the like. In the future, with deployment of small base stations having high-band and large-bandwidth capabilities such as millimeter waves and terahertz in a 6G network, resolution in sensing is significantly improved in comparison with centimeter waves. This enables the 6G network to provide more precise sensing services.

Purposes of sensing broadly fall into two categories. The first category of sensing aims to assist communication or enhance communication performance. For example, a base station provides more accurate beamforming and alignment equipment by tracking the movement track of a device. The other category of sensing is not directly related to communication. For example, the base station monitors weather conditions using radio signals, and a mobile phone recognizes a gesture of a user through millimeter-wave wireless sensing.

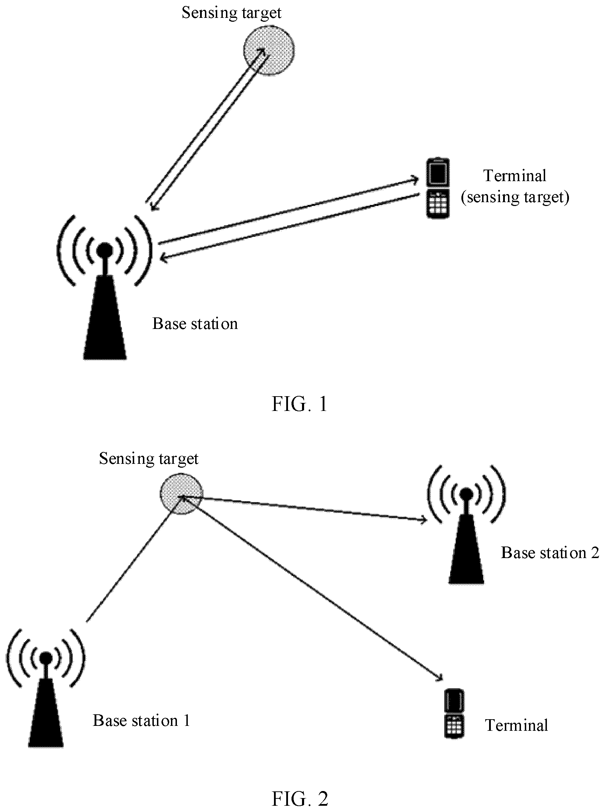

The following sensing modes may be available:
(1) Active sensing: As shown in FIG. 1, a device performs sensing by using a reflected signal such as an echo of a signal transmitted by the device. A transmitter and a receiver are at a same location and can use different antennas to sense environment information around the device.
(2) Passive sensing: As shown in FIG. 2, a transmitter and a receiver are at different locations, and the receiver performs sensing using a radio signal transmitted by the transmitter. For example, base station 1 senses environment information between base station 1 and base station 2 by receiving a radio signal from base station 2.
(3) Interactive sensing: Through information exchange, a sensing entity and a target object agree on an electromagnetic wave sender, and a sending time, frequency, format, and the like, to complete a process of sensing.

However, in the related art, there is no related procedure for wireless sensing. As a result, a communication procedure is incomplete.

### SUMMARY

Embodiments of this application provide a sensing method, an apparatus, and a network device, so as to solve the problem that communication sensing cannot be realized because there is no relevant interaction process for wireless sensing in the related art.

According to a first aspect, a sensing method is provided, where the sensing method includes:
sending, by a first network device, a sensing signal; and
detecting, by the first network device, an echo of the sensing signal based on a measurement quantity of the sensing signal, and obtaining a measurement value corresponding to the measurement quantity.

According to a second aspect, a sensing apparatus is provided, where the sensing apparatus is applied to a first network device and includes:
a first sending module, configured to send a sensing signal;
a first obtaining module, configured for the first network device to detect an echo of the sensing signal based on a measurement quantity of the sensing signal and obtain a measurement value corresponding to the measurement quantity.

According to a third aspect, a sensing method is provided, where the sensing method includes:
sending, by a second network device, at least one of a first sensing requirement and configuration information of a sensing signal to a first network device.

According to a fourth aspect, a sensing apparatus is provided, where the sensing apparatus is applied to a second network device and includes:
a second sending module, configured to send at least one of a first sensing requirement and configuration information of a sensing signal to the first network device.

According to a fifth aspect, a network device is provided. The network device includes a processor, a memory, and a program or instructions stored in the memory and capable of running on the processor, and when the program or instructions are executed by the processor, the steps of the method according to the third aspect or the third aspect are implemented.

According to a sixth aspect, a network device is provided. The network device is a first network device and includes a processor and a communication interface, where the communication interface is configured to send a sensing signal; and the processor is configured for the first network device to detect an echo of the sensing signal based on a measurement quantity of the sensing signal, and obtain a measurement value corresponding to the measurement quantity.

According to a seventh aspect, a network device is provided. The network device is a second network device and includes a processor and a communication interface, where the communication interface is configured to send at least one of a first sensing requirement and configuration information of a sensing signal to a first network device.

According to an eighth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to a ninth aspect, a chip is provided. The chip includes a processor and a communication interface, where the communication interface is coupled to the processor, and the processor is configured to run a program or instructions to implement the steps of the method according to the first aspect or the third aspect.

According to a tenth aspect, a computer program or program product is provided. The computer program or program product is stored in a storage medium. The program or program product is executed by at least one processor to implement the steps of the method according to the first aspect or the third aspect.

In the embodiments of this application, the received sensing signal is detected by using the measurement quantity of the sensing signal, so that the measurement value corresponding to the measurement quantity is obtained. In this way, a network sensing procedure is improved, and it is ensured that a network can perform sensing smoothly.

### BRIEF DESCRIPTION OF DRAWINGS

FIG. 1 is a schematic diagram of active sensing;
FIG. 2 is a schematic diagram of passive sensing;
FIG. 3 is a schematic diagram of classification of waveform integration of sensing and communication;
FIG. 4 is a first schematic flowchart of a sensing method according to an embodiment of this application;
FIG. 5 is a schematic diagram of network elements in specific application scenario 1;
FIG. 6 is a first schematic modular diagram of a sensing apparatus according to an embodiment of this application;
FIG. 7 is a structural block diagram of a network device according to an embodiment of this application;
FIG. 8 is a second schematic flowchart of a sensing method according to an embodiment of this application;
FIG. 9 is a second schematic modular diagram of a sensing apparatus according to an embodiment of this application; and
FIG. 10 is a structural block diagram of a communication device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or more first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

The relevant technologies in this application are first described as follows:
Functions and application purposes of wireless sensing are shown in Table 1.

**Table 1 Functions and application purposes of wireless sensing**

| Wireless sensing category | Sensing function | Application purpose |
|---|---|---|
| Large-scale macro sensing | Weather, air quality, and the like | Meteorology, agriculture, and life service |
| | Vehicular flow (crossing), and pedestrian flow (metro entrance) | Smart city, intelligent transportation, and commercial service |
| | Animal activity, migration, and the like | Animal husbandry, ecological and environmental protection, and the like |
| | Object tracking, ranging, velocity measurement, contour, and the like | Many application scenarios of conventional radars |
| | Three-dimensional map construction | Intelligent driving, navigation, and smart city |
| Short-range refined sensing | Action and gesture recognition | Intelligent interaction, game, and smart home using a smartphone |
| | Heartbeat/respiration and the like | Health and medical care |
| | Imaging, material detection, and the like | Security, industry, and the like |

A sensing function or another sensing requirement in Table 1 can be implemented by sending sensing signals and receiving or detecting sensing signals. Devices that send sensing signals and receive or detect sensing signals may be a same device or different devices.

An integrated design of communication and sensing is feasible in the following aspects:
First, both a communication system and a sensing system are based on an electromagnetic wave theory, and emission and reception of electromagnetic waves are used to complete acquisition and transmission of information.

Both the communication system and the sensing system have structures such as antennas, transmitters, receivers, and signal processors, and their hardware resources largely overlap.

With development of technologies, the two systems also have more overlaps in their operating bands.

There are similarities in key technologies such as signal modulation and reception/detection, and a waveform design.

An air interface design of a B5G system or a 6G system supports both wireless communication signals and wireless sensing signals. Based on integrated means of communication and sensing such as a joint signal design and/or hardware sharing, an integrated design of communication and sensing functions can be implemented. The system has a sensing capability or provides a sensing service while performing information transmission.

Integration of communication and sensing brings the following benefits:
costs are reduced;
a device size is reduced;
device power consumption is reduced;
spectral efficiency is improved; and
interference between communication and sensing is reduced, and system performance is improved.

Currently, a scope of integration of communication and sensing is not clearly defined. In a broad sense, the integration of communication and sensing includes the following:
a same network provides communication services and sensing services;
a same terminal provides communication services and sensing services;
a same spectrum provides communication services and sensing services; and
an integrated communication and sensing service, that is, a joint design of a communication signal and a sensing signal, is completed in same radio transmission.

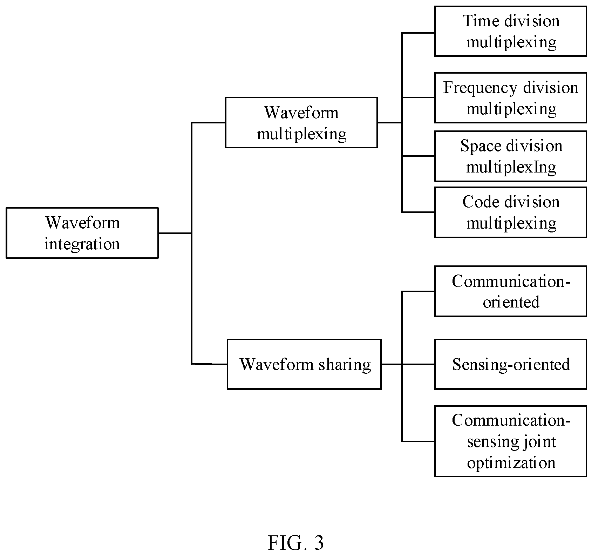

A schematic diagram of classification of waveform integration of sensing and communication is shown in FIG. 3.

The sensing method, apparatus, and network device provided in the embodiments of this application are hereinafter described in detail by using some embodiments and application scenarios thereof with reference to the accompanying drawings.

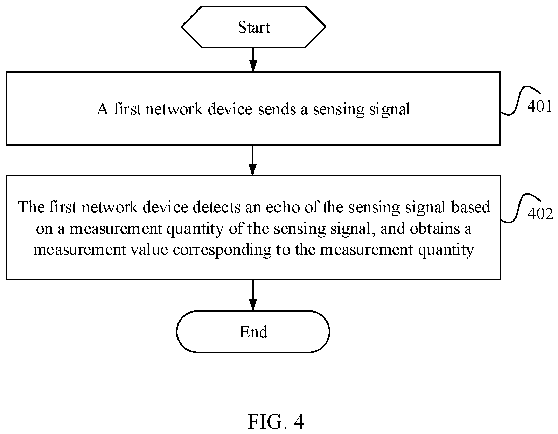

As shown in FIG. 4, an embodiment of this application provides a sensing method including the following steps.

Step 401: A first network device sends a sensing signal.

Step 402: The first network device detects an echo of the sensing signal based on a measurement quantity of the sensing signal, and obtains a measurement value corresponding to the measurement quantity.

It should be noted that this embodiment of this application is mainly aimed at a base station sending a sensing signal and a base station receiving a sensing signal for detection to obtain a measurement value. To be specific, the first network device mentioned in this embodiment of this application is the base station on the access network side; the second network device mentioned in this embodiment of this application may be an access and mobility management function (Access and Mobility Management Function, AMF) entity on the core network side; the second network device may alternatively be a sensing function entity, for example, it may be called a sensing network function entity or a sensing network element, and the sensing function entity can be located on the core network side or the access network side; and the second network device may alternatively be another function entity on the core network side.

It should be noted that the first network device can determine the measurement quantity of the sensing signal in at least one of the following ways.

A11. The first network device receives first indication information sent by a second network device, where the first indication information is used to indicate the measurement quantity of the sensing signal that the first network device needs to measure.

Specifically, in this case, the measurement quantity of the sensing signal is sent to the base station by the AMF or the sensing function entity.

A12. The first network device determines the measurement quantity of the sensing signal according to a first sensing requirement.

Specifically, in this case, the measurement quantity of the sensing signal is determined by the first network device itself according to the first sensing requirement. Optionally, the first sensing requirement may be sent to the terminal by the second network device, or may be generated by the second network device.

It should also be noted that to accurately send the sensing signal, the first network device needs to determine configuration information of the sensing signal before sending the sensing signal.

Specifically, that the first network device determines the configuration information of the sensing signal includes at least one of the following steps:

B11. The first network device receives first configuration information of the sensing signal, where the first configuration information is sent by the second network device.

B12. The first network device determines second configuration information of the sensing signal based on first information.

The first information includes at least one of the following:

### B121. First sensing requirement.

It should be noted that the first sensing requirement is sent by the second network device to the first network device.

B122. First recommendation information of the configuration information, where the first recommendation information is determined by the second network device according to the first sensing requirement.

Herein, it should be noted that the configuration information of the sensing signal can be informed by only the AMF to the base station, in which case, the first configuration information contains all configurations of the sensing signal; the configuration information of the sensing signal can alternatively be determined by only the base station itself, in which case, the second configuration information contains all configurations of the sensing signal; and the configuration information of the sensing signal can alternatively be jointly determined by the base station 1nd the AMF entity (or the sensing function entity), to be specific, each device determines only some of parameters or part of configuration information in the configuration information of the sensing signal.

For example, the configuration information of the sensing signal includes three configuration parameters A, B, and C. In the case that the configuration information of the sensing signal is informed by only the AMF entity or the sensing function entity to the base station, the first configuration information contains three configuration parameters A, B, and C of the sensing signal. In the case that the configuration information of the sensing signal is determined by only the base station itself, the second configuration information contains three configuration parameters A, B, and C of the sensing signal. In the case that the configuration information of the sensing signal is jointly determined by the base station 1nd the AMF, the first configuration information contains one part of the three configuration parameters A, B, and C of the sensing signal (for example, the first configuration information includes A), and the second configuration information contains the other part of the three configuration parameters A, B, and C of the sensing signal (for example, the first configuration information includes B and C).

It should be further explained that the second network device can determine the first configuration information of the sensing signal in the following ways:
determining the first configuration information of the sensing signal based on third information; where
the third information includes at least one of the following:
   B21. First sensing requirement.
   B22. Sensing capability information sent by the first network device.
   B23. Second recommendation information of the configuration information, where the second recommendation information is determined by the first network device according to the first sensing requirement and sent to the second network device.

It should be further noted that the first sensing requirement mentioned in this embodiment of this application is associated with at least one of the following:

### C11. Sensing object.

Optionally, the sensing object includes but is not limited to at least one of an object, a device, a person, an animal, a building, a vehicle, an environment, air quality, humidity, temperature, and a specific area (that is, a zone).

### C12. Sensing quantity.

Optionally, the sensing quantity includes but is not limited to at least one of a location of the sensing object, a distance to the sensing object, a movement velocity of the sensing object, imaging of the sensing object, a movement track of the sensing object, and texture analysis and material analysis of the sensing object.

### C13. A sensing metric.

Optionally, the sensing metric includes but is not limited to at least one of sensing accuracy, a sensing error, a sensing range, a sensing delay, a detection probability, and a false alarm probability.

Specifically, the sensing accuracy includes distance resolution, imaging resolution, movement velocity resolution, or angle resolution; and the sensing error includes a distance error, an imaging error, or a movement velocity error.

It should be noted that a sensing result is a combination of the sensing object and the sensing quantity.

Optionally, the first sensing requirement may alternatively be associated with the configuration information of the sensing signal or the measurement quantity of the sensing signal.

As shown in Table 2, the first sensing requirement may fall into several sensing categories, and each sensing category is associated with at least one of the configuration information of the sensing signal and the measurement quantity of the sensing signal. The association relationship may be prescribed in a protocol or notified through signaling between different devices. If a device has a sensing requirement, for example, if the sensing requirement requires that another device (for example, terminal) should measure and feed back a measurement quantity related to environment reconstruction, the sensing requirement is sensing index 1. Optionally, the terminal obtains sensing index 1 based on received signaling sent by another device, and determines the configuration information of the sensing signal and/or the measurement quantity of the sensing signal based on sensing index 1 and Table 2.

**Table 2 Relationship between sensing classification and the configuration information and measurement quantity of the sensing signal**

| Sensing index | Sensing classification | Configuration information of the sensing signal | Measurement quantity of the sensing signal |
|---|---|---|---|
| 1 | Environment reconstruction | SC-FDMA (Single-carrier Frequency-Division Multiple Access, single-carrier frequency-division multiple access) waveform corresponding parameters and time-frequency resources, and the like | Target radar cross section (Radar Cross Section, RCS) information and received signal strength indicator (Received Signal Strength Indicator, RSSI) |
| 2 | Weather monitoring | SC-FDMA, corresponding parameters and time-frequency resources, and the like | Channel state information CSI, received signal strength indicator (RSSI), and the like |
| 3 | PM2.5 monitoring | OFDM, corresponding parameters and time-frequency resources, and the like | Channel state information CSI and received signal strength indicator (RSSI) |
| 4 | Traffic monitoring | Orthogonal time-frequency space (Orthogonal Time Frequency Space, OTFS), corresponding parameters and time-frequency resources, and the like | Doppler shift |
| 5 | Pedestrian flow monitoring | OFDM, corresponding parameters and time-frequency resources, and the like | channel state information CSI |

Optionally, in another embodiment of this application, after the first network device obtains the measurement value corresponding to the measurement quantity, the method further includes any one of step D11 and D12.

D11. Send the measurement quantity and the measurement value corresponding to the measurement quantity to a second network device.

Optionally, in this case, the second network device can determine a sensing result based on the measurement quantity and the measurement value corresponding to the measurement quantity, and send the sensing result to a terminal (which corresponds to a case that the terminal initiates a sensing service) or a third network device (which corresponds to a case that another device other than the terminal initiates a sensing service). Specifically, the third network device can be another base station, that is, a base station other than the base station measuring a sensing signal, another network element in a core network, for example, an application server (which corresponds to a case that a third-party application initiates a sensing service), a network management system, or the like.

Optionally, in this case, the second network device may send the measurement quantity and the measurement value corresponding to the measurement quantity to a terminal or a third network device, and the terminal or the third network device can convert the sensing result by itself.

D12. Determine a sensing result based on the measurement quantity and the measurement value corresponding to the measurement quantity, and send the sensing result to the second network device.

Optionally, the measurement quantity and the measurement value corresponding to the measurement quantity are the sensing result.

It should be noted that in this case, after receiving the sensing result, the second network device may send the sensing result to the terminal or the third network device.

From the perspective of sensing a service initiator, actions that need to be performed after the base station obtains the measurement quantity are illustrated as follows.

In a case that a third-party application initiates a sensing service, optionally, after obtaining the measurement value, the base station may send the measurement quantity and the measurement value corresponding to the measurement quantity to the sensing function entity, the sensing function entity determines a sensing result based on the measurement value and sends the sensing result to an application server, and the application server sends the sensing result to a third-party application; and optionally, after obtaining the measurement value, the base station may determine a sensing result based on the measurement quantity and the measurement value corresponding to the measurement quantity and send the sensing result to the sensing function entity, the sensing function entity sends the sensing result to an application server, and the application server sends the sensing result to a third-party application.

In a case that the AMF initiates a sensing service, optionally, after obtaining the measurement value, the base station may send the measurement quantity and the measurement value corresponding to the measurement quantity to the AMF, and the AMF determines a sensing result based on the measurement value; and optionally, after obtaining the measurement value, the base station may determine a sensing result based on the measurement quantity and the measurement value corresponding to the measurement quantity and send the sensing result to the AMF.

In a case that the terminal initiates a sensing service, optionally, after obtaining the measurement value, the base station may send the measurement quantity and the measurement value corresponding to the measurement quantity to the AMF, and the AMF determines a sensing result based on the measurement value and sends the sensing result to the terminal through non-access stratum (Non-Access Stratum, NAS) signaling; and optionally, after obtaining the measurement value, the base station may determine a sensing result based on the measurement quantity and the measurement value corresponding to the measurement quantity and send the sensing result to the AMF, and the AMF sends the sensing result to the terminal through NAS signaling.

It should also be noted that the sensing result mentioned in this embodiment of this application includes at least one of the following:

### E11. Characteristic information of a target object.

For example, the characteristic information may include presence, a distance, a location, a speed, an acceleration, a material, a shape, a category, a radar cross section RCS, and a polarized scattering characteristic of the target object.

### E12. Information related to a target event.

For example, the information related to the target even may induce fall detection, intrusion detection, quantity statistics, indoor positioning, gesture recognition, lip recognition, gait recognition, expression recognition, respiration monitoring, or heart rate monitoring.

### E13. Information related to a target environment.

For example, the information related to the target environment may include humidity, brightness, temperature and humidity, atmospheric pressure, air quality, weather conditions, topography, building/vegetation distribution, population statistics, crowd density, or vehicle density.

Optionally, the sensing result of this embodiment of this application may further include at least one of the following:
E101. Location of the target object.
E102. Distance of the target object.
E103. Speed of the target object.
E104. Detection result of the target object.
E105. Tracking result of the target object.
E106. Recognition result of the target object.
E107. Imaging result of the target object.
E108. Humidity of the target environment.
E109. Temperature of the target environment.
E110. Air quality of the target environment.

The sensing function entity mentioned in this embodiment of this application satisfies at least one of the following:
F101. Managing overall coordination and scheduling of resources required for sensing.
F102. Calculating a sensing result.
F103. Estimating sensing accuracy.
F104. Verifying a sensing result.
F105. Supporting an immediate sensing request.
F106. Supporting a deferred sensing request.
F107. Supporting a periodic or event-triggered sensing request.
F108. Supporting cancellation of a periodic or triggered sensing behavior.
F109. Corresponding to at least one AMF entity.

In other words, a plurality of sensing function entities may correspond to one AMF entity, or one sensing function entity may be connected to a plurality of AMF entities.

F110. Determining a sensing mode based on second information.

The second information includes at least one of type of a sensing client, sensed quality of service (Quality of Service, QoS), sensing capability of a terminal, and sensing capability of the first network device.

The sensing mode is associated with an entity that sends the sensing signal and an entity that receives the sensing signal. Specifically, a relationship between the entity that sends the sensing signal and the entity that receives the sensing signal, in a correspondence with the sensing mode, includes at least one of the following:

F1101. The first network node sends the sensing signal, and the second network node receives the sensing signal.

In this case, base station 1 sends the sensing signal and base station B receives the sensing signal.

F1102. The first network node sends and receives the sensing signal.

In this case, base station 1 sends the sensing signal and base station 1 receives the sensing signal.

F1103. The first network node sends the sensing signal, and a terminal device associated with the first network node receives the sensing signal.

In this case, base station 1 sends the sensing signal and the terminal receives the sensing signal.

F1104. A first terminal device sends the sensing signal, and a second terminal device receives the sensing signal.

In this case, terminal A sends the sensing signal and terminal B receives the sensing signal.

F1105. The first terminal device sends and receives the sensing signal.

In this case, terminal A sends the sensing signal and terminal A receives the sensing signal.

F1106. The first terminal device sends the sensing signal, and the first network node receives the sensing signal.

In this case, terminal A sends the sensing signal and base station 1 receives the sensing signal.

It should also be noted that the sensing function entity may be located on the core network side or the base station side. If the sensing function entity is located on the base station side, all procedures of the sensing service are completed in a radio access network (Radio Access Network, RAN) (in a case that the base station triggers the sensing service, or user equipment (User Equipment, UE) triggers the sensing service). The sensing function entity may be a separate function entity/physical entity, or is deployed in a universal server of the core network as one of functions of the core network, or is deployed on the base station side as one of functions of the base station. The sensing function entity directly exchanges the sensing request and the sensing result with the application server (for example, an application server of an operator); or the sensing function entity exchanges the sensing request and the sensing result with the AMF, and the AMF may directly or indirectly (through a gateway mobile location center (Gateway Mobile Location Center, GMLC) and a network exposure function (Network Exposure Function, NEF)) exchange the sensing request and the sensing result with the application server (for example, third party application server).

It should be noted that the configuration information of the sensing signal in this embodiment of this application includes at least one of the following parameters:

### H101. Waveform of the sensing signal.

For example, orthogonal frequency division multiplexing (Orthogonal Frequency Division Multiplexing, OFDM), single-carrier frequency-division multiple access (Single-carrier Frequency-Division Multiple Access, SC-FDMA), orthogonal time frequency space (Orthogonal Time Frequency Space, OTFS), a frequency modulated continuous wave (Frequency Modulated Continuous Wave, FMCW), or a pulse signal.

### H102. Subcarrier spacing of the sensing signal.

For example, the subcarrier spacing of OFDM system is 30 KHz.

### H103. Guard interval of the sensing signal.

It should be noted that the guard interval is a time interval from a moment when sending of the signal ends to a moment when a latest echo signal of the signal is received. This parameter is proportional to a maximum sensing distance. For example, the guard interval may be found through calculation based on 2 dmax/c, where dmax is the maximum sensing distance (belonging to the sensing requirement). For example, for a self-sent and self-received sensing signal, dmax represents a maximum distance from a sensing signal transmission and reception point to a signal transmission point. In some cases, an OFDM signal cyclic prefix (Cyclic Prefix, CP) may function a minimum guard interval.

### H104. Bandwidth of the sensing signal.

It should be noted that this parameter is inversely proportional to the distance resolution and may be found based on c/(2×delta_d), where delta_d is the distance resolution (belonging to the sensing requirement), and c is the velocity of light.

### H105. Burst (burst) duration of the sensing signal.

It should be noted that the burst duration is inversely proportional to the speed resolution (belonging to the sensing requirement). The burst duration is a time span of the sensing signal, and is mainly used for calculating a Doppler shift. This parameter may be found through calculation based on c/(2×delta_v×fc), where delta_v is the velocity resolution, and fc is a carrier frequency of the sensing signal.

### H106. Time domain interval of the sensing signal.

It should be noted that the time domain interval may be found through calculation based on c/(2×fc×v_range), where v_range is a maximum speed minus a minimum speed (belonging to the sensing requirements), and this parameter is a time interval between two adjacent sensing signals.

### H107. Send signal power of the sensing signal.

For example, one value is taken from -20 dBm to 23 dBm every 2 dBm.

### H108. Signal format of the sensing signal.

For example, the signal format may be a sounding reference signal (Sounding Reference Signal, SRS), a demodulation reference signal (Demodulation Reference Signal, DMRS), a positioning reference signal (Positioning Reference Signal, PRS), or the like, or another predefined signal, and other information such as a related sequence format.

### H109. Signal direction of the sensing signal.

For example, the signal direction may be the direction of the sensing signal or beam information.

### H110. Time resource of the sensing signal.

For example, the time resource may be an index of a slot in which the sensing signal is located or an index of a symbol in the slot. There are two types of time resources. One type is a one-off time resource. For example, an omnidirectional first signal is sent on one symbol. One type is a non-one-off time resource. For example, in a plurality of groups of periodic time resources or discontinuous time resources (which may include a start time and an end time), sensing signals in a same direction are sent in each group of periodic time resources, and beam directions on periodic time resources of different groups are different.

### H111. Frequency resource of the sensing signal.

Optionally, the frequency resource includes a center frequency of the sensing signal, a bandwidth, a resource block (Resource Block, RB) or subcarrier, a reference point (Point A), a start bandwidth location, or the like.

H112. Quasi co-location (Quasi co-location, QCL) relationship of the sensing signal.

For example, the sensing signal includes a plurality of resources, and each resource is QCL with one synchronization signal/PBCH block (or synchronization signal block) (Synchronization Signal and PBCH block, SSB). The QCL includes type A (Type A), type B, type C, or type D.

It should be noted that the measurement quantity in this embodiment of this application includes at least one of the following:

### K11. First type of measurement quantity.

Specifically, the first type of measurement quantity includes at least one of the following:
K111. Channel matrix H.
K112. Received signal strength indicator (RSSI).
K113. Reference signal received power (Reference Signal Received Power, RSRP).
K114. Channel state information (CSI).
K115. Power of each path in a multipath channel.
K116. Delay of each path in a multipath channel.
K117. Angle information of each path in the multipath channel.
K118. Doppler spread.
K119. Doppler shift.
K120. Phase difference between a sensing signal received by a first antenna and a sensing signal received by a second antenna.
K121. Delay difference between the sensing signal received by the first antenna and the sensing signal received by the second antenna.
K122. Characteristic difference between an I signal and a Q signal.

It should be noted that the characteristic difference may be a phase difference or another difference between the I signal and the Q signal.

It should be noted herein that the I signal and the Q signal are an in-phase signal and a quadrature signal respectively, where I is in-phase (in-phase), Q is quadrature (quadrature), and the phase difference between the I signal and the Q signal is 90 degrees.

### K12. Second type of measurement quantity.

Specifically, the second type of measurement quantity includes at least one of the following:

### K121. Characteristic information of a target object.

It should be noted that the characteristic information of the target object is information that can reflect an attribute or a status of the target object, and may be at least one of the following: presence of the target object, a distance of the target object, a location of the target object, a velocity of the target object, an acceleration of the target object, a material of the target object, a shape of the target object, a category of the target object, a radar cross section (Radar Cross Section, RCS) of the target object, a polarized scattering characteristic, and the like.

### K122. Information related to a target event.

It should be noted that the information related to the target event may be information about the target event, that is, information that can be detected or sensed when the target event occurs. The information related to the target event may be at least one of the following: fall detection, intrusion detection, quantity statistics, indoor positioning, gesture recognition, lip recognition, gait recognition, expression recognition, respiration monitoring, heart rate monitoring, and the like.

### K123. Information related to a target environment.

It should be noted that the information related to the target environment may be at least one of the following: humidity, brightness, temperature and humidity, atmospheric pressure, air quality, weather conditions, topography, building/vegetation distribution, population statistics, crowd density, vehicle density, and the like.

Optionally, the measurement quantity may further include at least one of the following:
K21. Location, material, shape, and/or category of a reflection point.
K22. Radar spectrum information.

Optionally, the measurement quantity is a measurement quantity for each antenna or a measurement quantity for each sensing resource.

For example, the measurement quantity is a measurement quantity of each antenna (port) at a sending end or a receiving end, or the measurement quantity is a measurement quantity on each sensing resource, for example, a measurement quantity of each resource block (Resource Block, RB), a subcarrier, or an RB group.

It should be noted that, in a case that the core network sends sensing related information to the base station, the core network or the sensing network function entity/sensing network element determines, based on a target area, which base station is an associated base station, and determines a direction in which the base station sends the sensing signal.

Examples of specific application scenarios of the actual application are given below.

Specific application scenario 1. Base station 1 sends and receives a sensing signal by itself, and a third-party application initiates a sensing service.

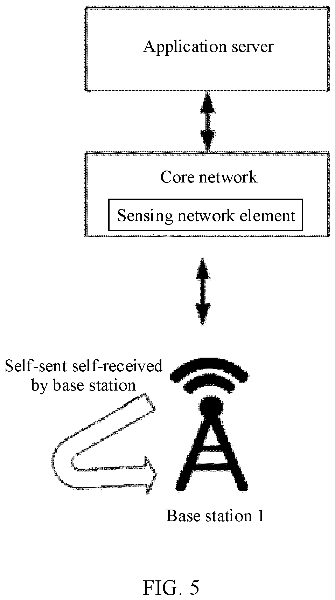

Network devices in this case are shown in FIG. 5, and the implementation processes in this case are mainly as follows.

Step S101: An application server receives a sensing requirement from a third-party application.

For example, the sensing requirement is to sense a three-dimensional map (with an accuracy/a resolution of the map of 5 megapixel) of a target zone. The target zone may be a specified zone, for example, a surrounding zone of a building, or may be a surrounding zone of a target UE. The sensing requirement may include information about the target zone, for example, latitude and longitude (range) information of the zone.

Step S102. The application server (including an intranet network server such as an IP multimedia subsystem (IP Multimedia Subsystem, IMS) or an internet network server) sends the sensing requirement to a core network (for example, AMF) or a sensing network function entity/sensing network element (if exists) of the core network; or
the application server sends the sensing requirement to AMF, and the AMF forwards the requirement to a sensing network function entity/sensing network element.

What needs to be explained herein is that the sensing network function entity/sensing network element of the core network interacts target information (where the target information includes a sensing processing request, an interactive sensing capability, interactive sensing auxiliary data, an interactive sensing measurement quantity, or a sensing result) with the target UE or the serving base station of the target UE to obtain a target sensing result or sensing measurement quantity (uplink measurement quantity or downlink measurement quantity); or may obtain, based on the target zone by interacting with another network element/function in the core network, information about a base station that may require the interactive information.

It should also be noted that if the AMF forwards this requirement to the sensing network function entity/sensing network element, and a plurality of sensing network function entities/sensing network elements may correspond to one AMF, there is a matter of selecting a sensing network function entity/sensing network element (by the AMF).

The factor the AMF considers when selecting a sensing network function entity/network element includes at least one of the following: requested QoS (for example, sensing accuracy, response time, and sensed QoS level), access type (3GPP access/non-3GPP access), access network (Access Network, AN) type (that is, 5G NR or eLTE) of the target UE, serving AN node (that is, gNodeB or NG-eNodeB), RAN configuration information, sensing network function entity/sensing network element capability, sensing network function entity/sensing network element load, sensing network function entity/sensing network element position, indication of single-event reporting or multiple-event reporting, event reporting duration, network slice information, or the like.

Step S103. The core network (or the sensing network function entity/sensing network element) sends the sensing requirement or configuration information of a sensing signal to base station 1.

It should also be noted that the configuration information of the sensing signal may alternatively be associated with the sensing requirement, so only the sensing requirement needs to be notified, and a receiving end determines the configuration information of the sensing signal according to the sensing requirement and an association relationship.

Optionally, the step of determining the configuration information of the sensing signal according to the sensing requirement (for example, determining a bandwidth of the sensing signal according to a sensing resolution requirement) is executed in the following ways.

Y11. Base station 1 reports its own sensing capability (a capability related to sending a sensing signal, for example, a maximum bandwidth of sending a sensing signal and a maximum power of sending a sensing signal) to the core network, and/or base station B reports its sensing capability (a capability related to receiving a sensing signal, for example, a maximum bandwidth of receiving a sensing signal and a supported measurement quantity of a sensing signal) to the core network (the AMF or sensing network function entity/sensing network element); and then the core network determines the configuration information of the sensing signal according to the sensing requirement.

Y12. The base station determines the configuration information of the sensing signal according to the sensing requirement.

Y13. The core network determines one part of the configuration information of the sensing signal, and the base station determines the other part of the configuration information of the sensing signal.

Y14. The core network recommends the configuration information of the sensing signal to the base station 1ccording to the sensing requirement, and the base station finally determines the configuration information of the sensing signal.

Y15. The base station recommends the configuration information of the sensing signal to the core network according to the sensing requirement, and the core network finally determines the configuration information of the sensing signal.

What needs to be explained herein is the method of determining base station 1: the core network or the sensing network function entity/sensing network element determines an associated base station 1s base station 1 based on the target zone, and determines a direction in which base station 1 sends the sensing signal.

Step S104. The core network (or sensing network function entity/sensing network element) sends a measurement quantity related to the sensing signal (for example, angle of arrive (Angle of Arrive, AOA), angle of departure (Angle of Departure, AOD), time delay, RSRP, and radar spectrum information) to base station 1 (receiving base station); or
the measurement quantity is determined by base station 1 according to the sensing requirement, and does not need to be indicated by separate signaling indication (a mapping table from sensing requirements to measurement quantities).

Step S105. Base station 1 sends a sensing signal.

It should be noted that base station 1 sends the sensing signal through beam sweeping (beam sweeping).

Step S106. Base station 1 receives a sensing signal.

After receiving the sensing signal, UE gets a measurement value corresponding to the measurement quantity, and one of the following processing manners can be selected for this measurement value.

Processing manner 1. Conversion from the measurement quantity to the sensing result is completed at the core network or application server.

Step S107. Base station 1 sends the measurement quantity to the core network (or the sensing network function entity/sensing network element).

Step S108: The core network (or the sensing network function entity/sensing network element) sends the measurement quantity to this application server, and the application server determines a sensing result based on the measurement quantity; or
the core network (or the sensing network function entity/sensing network element) determines a sensing result based on the measurement quantity, and sends the sensing result to the application server.

Step S109. The application server sends the sensing result to the third-party application.

Processing manner 2: Conversion from the measurement quantity to the sensing result is completed at the base station.

Step S107. Base station 1 determines a sensing result based on the measurement quantity, and sends the sensing result to the core network (or sensing network function entity/sensing network element).

Step S108. The core network (or sensing network function entity/sensing network element) sends the sensing result to this application server.

Step S109. The application server sends the sensing result to the third-party application.

It should also be noted that the information related to base station 1, for example, antenna location, synchronization information (starting time of single frequency network (Single Frequency Network, SFN)), and artificial intelligence (Artificial Intelligence, AI), also needs to be sent to a node that completes the preceding conversion to assist in the completion of the conversion process.

It should also be noted that an accounting function is completed by the core network or the application server.

It should also be noted that sensing signals in the foregoing procedure may be sent by a plurality of base stations, and the sensing signals may also be received by a plurality of base stations. Correspondingly, base station 1 in the foregoing procedure may be TRP A

Specific application scenario 2: Base station 1 sends and receives a sensing signal by itself, and a core network (or a network management system or a base station) initiates a sensing service.

The implementation processes in this case are mainly as follows.

Step S201. An AMF in a core network sends a sensing requirement (for example, network management requirement) or configuration information of a sensing signal to a sensing network function entity or a sensing network element.

For example, the sensing requirement is to sense a three-dimensional map (with an accuracy/a resolution of the map of 5 megapixel) of a target zone. The target zone may be a specified zone, for example, a surrounding zone of a building, or may be a surrounding zone of a target UE. The sensing requirement may include information about the target zone, for example, latitude and longitude (range) information of the zone.

Alternatively, an AMF receives a sensing requirement or configuration information of a sensing signal, which is sent by a network management system, and forwards the sensing requirement or the configuration information of the sensing signal to a sensing network function entity/sensing network element.

Alternatively, an AMF receives a sensing requirement or configuration information of a sensing signal, which is sent by a base station, and forwards the sensing requirement or the configuration information of the sensing signal to a sensing network function entity/sensing network element (Note: A sensing requirement or configuration information of a sensing signal of base station 1 does not need to be sent to a core network, but may be directly sent to base station B).

Step S202. The sensing network function entity/the sensing network element (with the same characteristics as described in Embodiment 1) sends the sensing requirement or the configuration information of the sensing signal to base station 1 (or the AMF sends the sensing requirement or the configuration information of the sensing signal to base station 1); or

It should also be noted that the configuration information of the sensing signal may alternatively be associated with the sensing requirement, so only the sensing requirement needs to be notified, and a receiving end determines the configuration information of the sensing signal according to the sensing requirement and an association relationship.

Optionally, for a main implementation of determining the configuration information of the sensing signal according to the sensing requirement (for example, determining a bandwidth value of the sensing signal according to a sensing resolution requirement), refer to the preceding descriptions. Details are not described herein again.

Step S203: The core network (or sensing network function entity/sensing network element) sends a measurement quantity related to the sensing signal (for example, angle of arrive (for example, AOA, AOD, time delay, RSRP, and radar spectrum information) to base station 1 (receiving base station); or
the measurement quantity is determined by base station 1 according to the sensing requirement, and does not need to be indicated by separate signaling indication (a mapping table from sensing requirements to measurement quantities).

Step S204. Base station 1 sends the sensing signal.

It should be noted that base station 1 sends the sensing signal through beam sweeping.

Step S205. Base station 1 receives the sensing signal.

After receiving the sensing signal, UE gets a measurement value corresponding to the measurement quantity, and one of the following processing manners can be selected for this measurement value.

Processing manner 1: Conversion from the measurement quantity to the sensing result is completed on the core network.

Step S206. Base station 1 sends the measurement quantity to the core network (or the AMF or the sensing network function entity/sensing network element).

Step S207. The core network (the AMF or the sensing network function entity/sensing network element) converts the measurement quantity to the sensing result;

If the sensing requirement of the core network comes from the network management system, the core network sends the sensing result to the network management system; or the core network sends the measurement quantity to the network management system, and the network management system converts the measurement quantity into sensing result.

If the sensing requirement of the core network comes from the base station, the core network sends the sensing result to the base station.

Processing manner 2: Conversion from the measurement quantity to the sensing result is completed at the base station.

Step S206. Base station 1 determines a sensing result based on the measurement quantity, and sends the sensing result to the core network (the AMF or the sensing network function entity/sensing network element).

If the sensing requirement of the core network comes from a network management system, the core network sends the sensing result to the network management system.

If the sensing requirement of the core network comes from the base station, the core network sends the sensing result to the base station.

It should be noted herein that if the sensing network function entity/sensing network element is deployed at the base station, an optional solution is: an entire sensing service does not need to pass through the core network.

It should also be noted that sensing signals in the foregoing procedure may be sent by a plurality of base stations, and the sensing signals may also be received by a plurality of base stations. Correspondingly, base station 1 in the foregoing procedure may be TRP A

Specific application scenario 3. Base station 1 sends and receives a sensing signal by itself, and UE initiates a sensing service.

The implementation processes in this case are mainly as follows.

Step S301: The UE sends configuration information of a sensing requirement or sensing signal to an AMF through NAS signaling. For example, the sensing requirement is to sense a three-dimensional map (with an accuracy/a resolution of the map of 5 megapixel) of a target zone. The target zone may be a specified zone, for example, a surrounding zone of a building, or may be a surrounding zone of a target UE. The sensing requirement may include information about the target zone, for example, latitude and longitude (range) information of the zone.

Step S302. The AMF sends the sensing requirement or the configuration information of the sensing signal to a sensing network function entity or a sensing network element.

Step S303. The sensing network function entity/sensing network element (where characteristics of the sensing network function entity/sensing network element are the same as those described in application scenario 1) sends the sensing requirement or the configuration information of the sensing signal to base station 1 (or the AMF sends the sensing requirement or the configuration information of the sensing signal to base station 1).

It should also be noted that the configuration information of the sensing signal may alternatively be associated with the sensing requirement, so only the sensing requirement needs to be notified, and a receiving end determines the configuration information of the sensing signal according to the sensing requirement and an association relationship.

Optionally, a manner of determining the configuration information of the sensing signal based on the sensing requirement (for example, determining a bandwidth value of the sensing signal based on a sensing resolution requirement) mainly includes at least one of the following:
Y21. Base station 1 reports its own sensing capability (a capability related to sending a sensing signal, for example, a maximum bandwidth of sending a sensing signal and a maximum power of sending a sensing signal) to the core network (the AMF or the sensing network function entity/sensing network element), and/or base station 1 reports its sensing capability (a capability related to receiving a sensing signal, for example, a maximum bandwidth of receiving a sensing signal and a supported measurement quantity of a sensing signal) to the core network; and then the core network determines the configuration information of the sensing signal according to the sensing requirement.
Y22. The base station determines the configuration information of the sensing signal according to the sensing requirement.
Y23. The core network determines one part of the configuration information of the sensing signal, and the base station determines the other part of the configuration information of the sensing signal.
Y24. The core network recommends the configuration information of the sensing signal to the base station 1ccording to the sensing requirement, and the base station finally determines the configuration information of the sensing signal.
Y25. The base station recommends the configuration information of the sensing signal to the core network according to the sensing requirement, and the core network finally determines the configuration information of the sensing signal.
Y26. The UE recommends the configuration information of the sensing signal to the base station 1ccording to the sensing requirement, and the base station finally determines the configuration information of the sensing signal.
Y27. The UE recommends the configuration information of the sensing signal to the core network according to the sensing requirement, and the core network finally determines the configuration information of the sensing signal.
Y28. The UE determines the configuration information of the sensing signal according to the sensing requirement.

Step S304. The core network (or sensing network function entity/sensing network element) sends a measurement quantity related to the sensing signal (for example, AOA, AOD, time delay, RSRP, and radar spectrum information) to base station 1 (receiving base station); or
the measurement quantity is determined by base station 1 according to the sensing requirement, and does not need to be indicated by separate signaling indication (a mapping table from sensing requirements to measurement quantities).

Step S305. Base station 1 sends the sensing signal.

It should be noted that base station 1 sends the sensing signal through beam sweeping.

Step S306: Base station 1 receives the sensing signal.

After receiving the sensing signal, UE gets a measurement value corresponding to the measurement quantity, and one of the following processing manners can be selected for this measurement value.

Processing manner 1: Conversion from the measurement quantity to the sensing result is completed on the core network.

Step S307. Base station 1 sends the measurement quantity to the core network (or the AMF or the sensing network function entity/sensing network element).

Step S308. The core network (the AMF or the sensing network function entity/sensing network element) converts the measurement quantity to the sensing result.

Step S309: The core network (the AMF or the sensing network function entity/sensing network element) sends the sensing result to the UE (through NAS signaling).

Processing manner 2: Conversion from the measurement quantity to the sensing result is completed at base station 1.

Step S307. Base station 1 determines a sensing result based on the measurement quantity, and sends the sensing result to the core network (the AMF or the sensing network function entity/sensing network element).

Step S308: The core network (the AMF or the sensing network function entity/sensing network element) sends the sensing result to the UE (through NAS signaling).

Processing manner 3: Conversion from the measurement quantity to the sensing result is completed at the UE.

Step S307: Base station 1 sends to the core network (or the sensing network function entity/sensing network element) based on the measurement quantity.

Step S308: The core network (the AMF or the sensing network function entity/sensing network element) sends the measurement quantity to the UE through NAS signaling.

Step S309: The UE determines the sensing result based on the measurement quantity.

It should also be noted that sensing signals in the foregoing procedure may be sent by a plurality of base stations, and the sensing signals may also be received by a plurality of base stations. Correspondingly, base station 1 in the foregoing procedure may be TRP A

It should be noted that this embodiment of this application provides a procedure related to wireless sensing based on a sensing signal sent by a base station. The procedure specifically includes a sensing procedure in a form in which the base station sends and receives a sensing signal, signaling exchange between different sensing nodes, and the like by itself. A sensing network function entity/sensing network element is added. In this way, a network communication procedure is improved, and it is ensured that sensing is performed smoothly.

It should be noted that the sensing method provided in this embodiment of this application may be performed by a sensing apparatus, or a control module configured to perform the sensing method in the sensing apparatus. In the embodiments of this application, assuming that the sensing apparatus performs the sensing methods, the sensing apparatus provided in the embodiments of this application is described.

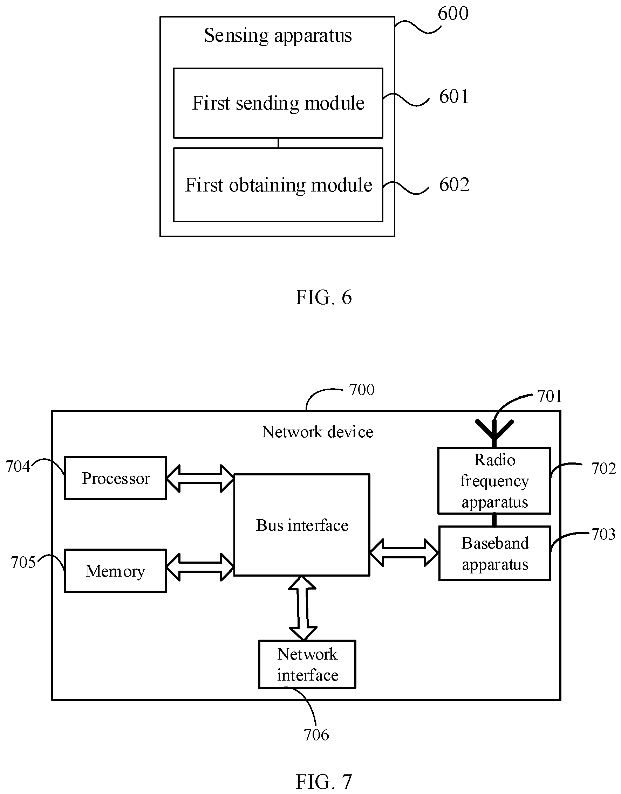

As shown in FIG. 6, an embodiment of this application provides a sensing apparatus 600, including:
a first sending module 601, configured to send a sensing signal; and
a first obtaining module 602, configured to detect an echo of the sensing signal based on a measurement quantity of the sensing signal and obtain a measurement value corresponding to the measurement quantity.

Optionally, before the first obtaining module 602 detects an echo of the sensing signal based on a measurement quantity of the sensing signal and obtains a measurement value corresponding to the measurement quantity, the apparatus further includes:
a first receiving module, configured to receive first indication information sent by a second network device, where the first indication information is used to indicate the measurement quantity of the sensing signal that the first network device needs to measure; and
a first determining module, configured to determine the measurement quantity of the sensing signal according to the first sensing requirement.

Optionally, before the first sending module 601 sends a sensing signal, the apparatus further includes:
a second determining module, configured to determine configuration information of the sensing signal.

Optionally, the second determining module is configured to implement at least one of the following:
receiving, by the first network device, first configuration information of the sensing signal, where the first configuration information is sent by a second network device; and
determining, by the first network device, second configuration information of the sensing signal based on first information; where
the first information includes at least one of the following:
   first sensing requirement; and
   first recommendation information of the configuration information, where the first recommendation information is determined by the second network device according to the first sensing requirement.

Optionally, the first sensing requirement is sent by the second network device to the first network device.

Optionally, the first sensing requirement is associated with at least one of the following:
sensing object;
sensing quantity; and
sensing index.

Optionally, after the first obtaining module 602 detects an echo of the sensing signal based on a measurement quantity of the sensing signal and obtains a measurement value corresponding to the measurement quantity, the apparatus further includes:
a first execution module, configured to send, to the second network device, the measurement quantity and the measurement value corresponding to the measurement quantity; and
a second execution module, configured to determine a sensing result based on the measurement quantity and the measurement value corresponding to the measurement quantity, and send the sensing result to the second network device.

Optionally, the sensing result includes at least one of the following:
characteristic information of a target object;
information related to a target event; and
information related to a target environment.

Optionally, the second network device includes an access and mobility management function AMF entity or a sensing function entity; where
the sensing function entity satisfies at least one of the following:
coordinating and scheduling overall resources required for sensing;
calculating a sensing result;
estimating sensing accuracy;
verifying a sensing result;
supporting an immediate sensing request;
supporting a deferred sensing request;
supporting a periodic or event-triggered sensing request;
supporting cancellation of a periodic or triggered sensing behavior; and
determining a sensing mode based on second information; where
the second information includes at least one of type of a sensing client, sensed quality of service QoS, sensing capability of a terminal, and sensing capability of the first network device; and
the sensing mode is associated with an entity that receives and sends a sensing signal.

Optionally, the configuration information of the sensing signal includes at least one of the following parameters:
waveform of the sensing signal;
subcarrier spacing of the sensing signal;
guard spacing of the sensing signal;
bandwidth of the sensing signal;
burst duration of the sensing signal;
time-domain interval of the sensing signal;
signal transmission power of the sensing signal;
signal format of the sensing signal;
signal direction of the sensing signal;
time resource of the sensing signal;
frequency resource of the sensing signal; and
quasi-co-location QCL relationship of the sensing signal.

Optionally, the measurement quantity includes at least one of the following:
first type of measurement quantity;
second type of measurement quantity;
the first type of measurement quantity includes at least one of the following:
   channel matrix H;
   received signal strength indicator RSSI;
   reference signal received power RSRP;
   channel state information CSI;
   power of each path in multipath channel;
   delay of each path in multipath channel;
   angle information of each path in multipath channel;
   Doppler spread;
   Doppler shift;
   phase difference between a sensing signal received by a first antenna and a sensing signal received by a second antenna;
   delay difference between a sensing signal received by a first antenna and a sensing signal received by a second antenna; and
   characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

It should be noted that the apparatus embodiment is an apparatus corresponding to the foregoing method. All the implementations in the foregoing method embodiment are applicable to the apparatus embodiment, with the same technical effects achieved. Details are not described herein again.

The sensing apparatus provided in this embodiment of this application can implement the processes implemented by the method embodiment in FIG. 4, with the same technical effects achieved. To avoid repetition, details are not described herein again.

Preferably, an embodiment of this application further provides a network device. The network device is a first network device and includes a processor, a memory, and a program or instructions stored in the memory and capable of running on the processor. When the program or instructions are executed by the processor, the processes of the sensing method embodiment applied in the first network device side are implemented, with the same technical effect achieved. To avoid repetition, details are not described herein again.

An embodiment of this application further provides a readable storage medium, where a program or instructions are stored in the computer-readable storage medium. When the program or instructions are executed by a processor, the processes of the sensing method embodiment applied in the first network device side are implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device. The network device is a first network device and includes a processor and a communication interface, where the communication interface is configured for sending a sensing signal; and the processor is configured to detect an echo of the sensing signal based on a measurement quantity of the sensing signal, and obtain a measurement value corresponding to the measurement quantity.

The network device embodiment corresponds to the foregoing network device method embodiment. All implementations in the foregoing method embodiment may be applicable to the network device embodiment, with the same technical effect achieved.

Specifically, an embodiment of the application further provides a network device, where the network device is a first network device. As shown in FIG. 7, the network device 700 includes an antenna 701, a radio frequency apparatus 702, and a baseband apparatus 703. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information out by using the antenna 701.

The frequency band processing apparatus may be located in the baseband apparatus 703. The method performed by the network device in the foregoing embodiment may be implemented by the baseband apparatus 703, and the baseband apparatus 703 includes a processor 704 and a memory 705.

The baseband apparatus 703 may include, for example, at least one baseband processing unit, where a plurality of chips are disposed on the baseband processing unit. As shown in FIG. 7, one of the chips is, for example, the processor 704, and connected to the memory 705, to invoke the program in the memory 705 to perform the operations of the network device shown in the foregoing method embodiment.

The baseband apparatus 703 may further include a network interface 706, configured to exchange information with the radio frequency apparatus 702, where the interface is, for example, a common public radio interface (Common Public Radio Interface, CPRI).

Specifically, the network device in this embodiment of this application further includes: instructions or a program stored in the memory 705 and capable of running on the processor 704. The processor 704 invokes the instructions or program in the memory 705 to execute the method executed by the modules shown in FIG. 6, with the same technical effects achieved. To avoid repetition, details are not described herein again.

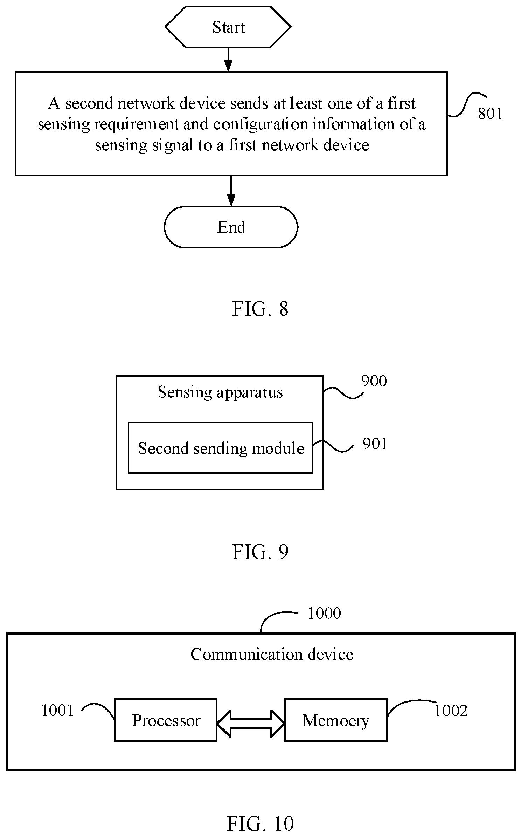

As shown in FIG. 8, an embodiment of this application further provides a sensing method including the following step.

Step 801: A second network device sends at least one of a first sensing requirement and configuration information of a sensing signal to a first network device.

Optionally, the method further includes:
sending, by the second network device, first indication information to the first network device; where
the first indication information is used to indicate a measurement quantity of the sensing signal that the first network device needs to measure.

Optionally, the configuration information of the sensing signal includes: first configuration information of the sensing signal; and
the first configuration information of the sensing signal is determined by the following determining method:
determining the first configuration information of the sensing signal based on third information; where
the third information includes at least one of the following:
   first sensing requirement;
   sensing capability information sent by the first network device; and
   second recommendation information of the configuration information, where the second recommendation information is determined by the first network device according to the first sensing requirement and sent to the second network device.

Optionally, the method of obtaining the first sensing requirement includes one of the following:
receiving the first sensing requirement from a terminal, the first network device, or a third network device side.

Optionally, the first sensing requirement is associated with at least one of the following:
sensing object;
sensing quantity; and
sensing index.

Optionally, after the second network device sends first sensing information to the first network device, the method further includes one of the following:
receiving the measurement quantity of the sensing signal and a measurement value corresponding to the measurement quantity that are sent by the first network device; and
receiving a sensing result sent by the first network device, where the sensing result is obtained by the first network device based on the measurement quantity of the sensing signal and the measurement value corresponding to the measurement quantity.

Optionally, after receiving the measurement quantity of the sensing signal and the measurement value corresponding to the measurement quantity that are sent by the first network device, the method further includes one of the following:
obtaining the sensing result based on the measurement quantity and the measurement value corresponding to the measurement quantity; and
sending, to a terminal or third network device, the measurement quantity and the measurement value corresponding to the measurement quantity.

Optionally, after the obtaining the sensing result based on the measurement quantity and the measurement value corresponding to the measurement quantity, the method further includes:
sending the sensing result to a terminal or a third network device.

Optionally, after the receiving a sensing result sent by the first network device, the method further includes:
sending the sensing result to a terminal or a third network device.

Optionally, the sensing result includes at least one of the following:
characteristic information of a target object;
information related to a target event; and
information related to a target environment.

Optionally, the measurement quantity includes at least one of the following:
first type of measurement quantity;
second type of measurement quantity;
the first type of measurement quantity includes at least one of the following:
   channel matrix H;
   received signal strength indicator RSSI;
   reference signal received power RSRP;
   channel state information CSI;
   power of each path in multipath channel;
   delay of each path in multipath channel;
   angle information of each path in multipath channel;
   Doppler spread;
   Doppler shift;
   phase difference between a sensing signal received by a first antenna and a sensing signal received by a second antenna;
   delay difference between a sensing signal received by a first antenna and a sensing signal received by a second antenna; and
   characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

Optionally, the configuration information of the sensing signal includes at least one of the following parameters:
waveform of the sensing signal;
subcarrier spacing of the sensing signal;
guard spacing of the sensing signal;
bandwidth of the sensing signal;
burst duration of the sensing signal;
time-domain interval of the sensing signal;
signal transmission power of the sensing signal;
signal format of the sensing signal;
signal direction of the sensing signal;
time resource of the sensing signal;
frequency resource of the sensing signal; and
quasi-co-location QCL relationship of the sensing signal.

Optionally, the second network device includes an access and mobility management function AMF entity or a sensing function entity; where
the sensing function entity satisfies at least one of the following:
coordinating and scheduling overall resources required for sensing;
calculating a sensing result;
estimating sensing accuracy;
verifying a sensing result;
supporting an immediate sensing request;
supporting a deferred sensing request;
supporting a periodic or event-triggered sensing request;
supporting cancellation of a periodic or triggered sensing behavior; and
corresponding to at least one AMF entity;
determining a sensing mode based on second information; where
the second information includes at least one of type of a sensing client, sensed quality of service QoS, sensing capability of a terminal, and sensing capability of the first network device; and
the sensing mode is associated with an entity that receives and sends a sensing signal.

It should be noted that all descriptions of the second network device in the foregoing embodiment are applicable to the embodiment of the sensing method, with the same technical effect achieved. Details are not described herein.

As shown in FIG. 9, an embodiment of this application further provides a sensing apparatus 900. The sensing apparatus 900 is applied to a second network device and includes:
a second sending module 901, configured to send at least one of a first sensing requirement and configuration information of a sensing signal to a first network device.

Optionally, the apparatus further includes:
a third sending module, configured to send first indication information to the first network device; where
the first indication information is used to indicate a measurement quantity of the sensing signal that the first network device needs to measure.

Optionally, the configuration information of the sensing signal includes: first configuration information of the sensing signal; and
the first configuration information of the sensing signal is determined by the following determining method:
determining the first configuration information of the sensing signal based on third information; where
the third information includes at least one of the following:
   first sensing requirement;
   sensing capability information sent by the first network device; and
   second recommendation information of the configuration information, where the second recommendation information is determined by the first network device according to the first sensing requirement and sent to the second network device.

Optionally, the apparatus further includes:
a first receiving module, configured to receive a first sensing requirement from a terminal, the first network device, or a third network device side.

Optionally, the first sensing requirement is associated with at least one of the following:
sensing object;
sensing quantity; and
sensing index.

Optionally, after the second sending module 901 sends at least one of a first sensing requirement and configuration information of a sensing signal to the first network device, the apparatus further includes one of the following:
a second receiving module, configured to receive a measurement quantity of the sensing signal and a measurement value corresponding to the measurement quantity that are sent by the first network device; and
a third receiving module, configured to receive a sensing result sent by the first network device, where the sensing result is obtained by the first network device based on the measurement quantity of the sensing signal and the measurement value corresponding to the measurement quantity.

Optionally, after the second receiving module receives the measurement quantity of the sensing signal and the measurement value corresponding to the measurement quantity that are sent by the first network device, the apparatus further includes one of the following:
a second obtaining module, configured to obtain a sensing result based on the measurement quantity and the measurement value corresponding to the measurement quantity; and
a fourth sending module, configured to send, to a terminal or third network device, the measurement quantity and the measurement value corresponding to the measurement quantity.

Optionally, after the second obtaining module obtains the sensing result based on the measurement quantity and the measurement value corresponding to the measurement quantity, the apparatus further includes:
a fifth sending module, configured to send the sensing result to the terminal or the third network device.

Optionally, after the third receiving module receives the sensing result sent by the first network device, the apparatus further includes:
a sixth sending module, configured to send the sensing result to the terminal or the third network device.

Optionally, the sensing result includes at least one of the following:
characteristic information of a target object;
information related to a target event; and
information related to a target environment.

Optionally, the measurement quantity includes at least one of the following:
first type of measurement quantity;
second type of measurement quantity;
the first type of measurement quantity includes at least one of the following:
   channel matrix H;
   received signal strength indicator RSSI;
   reference signal received power RSRP;
   channel state information CSI;
   power of each path in multipath channel;
   delay of each path in multipath channel;
   angle information of each path in multipath channel;
   Doppler spread;
   Doppler shift;
   phase difference between a sensing signal received by a first antenna and a sensing signal received by a second antenna;
   delay difference between a sensing signal received by a first antenna and a sensing signal received by a second antenna; and
   characteristic difference between an I signal and a Q signal; and
   the second type of measurement quantity includes at least one of the following:
      characteristic information of a target object;
      information related to a target event; and
      information related to a target environment.

Optionally, the measurement quantity is a measurement quantity for each antenna or a measurement quantity for each sensing resource.

Optionally, the configuration information of the sensing signal includes at least one of the following parameters:
waveform of the sensing signal;
subcarrier spacing of the sensing signal;
guard spacing of the sensing signal;
bandwidth of the sensing signal;
burst duration of the sensing signal;
time-domain interval of the sensing signal;
signal transmission power of the sensing signal;
signal format of the sensing signal;
signal direction of the sensing signal;
time resource of the sensing signal;
frequency resource of the sensing signal; and
quasi-co-location QCL relationship of the sensing signal.

Optionally, the second network device includes an access and mobility management function AMF entity or a sensing function entity; where
the sensing function entity satisfies at least one of the following:
coordinating and scheduling overall resources required for sensing;
calculating a sensing result;
estimating sensing accuracy;
verifying a sensing result;
supporting an immediate sensing request;
supporting a deferred sensing request;
supporting a periodic or event-triggered sensing request;
supporting cancellation of a periodic or triggered sensing behavior; and
corresponding to at least one AMF entity;
determining a sensing mode based on second information; where
the second information includes at least one of type of a sensing client, sensed quality of service QoS, sensing capability of a terminal, and sensing capability of the first network device; and
the sensing mode is associated with an entity that receives and sends a sensing signal.

Preferably, an embodiment of this application further provides a network device. The network device is a second network device and includes a processor, a memory, and a program or instructions stored in the memory and capable of running on the processor. When the program or instructions are executed by the processor, the processes of the sensing method embodiment applied in the second network device side are implemented, with the same technical effect achieved. To avoid repetition, details are not described herein again.

An embodiment of this application further provides a readable storage medium, where a program or instructions are stored in the computer-readable storage medium, and the storage medium may be volatile or nonvolatile. When the program or instructions are executed by a processor, the processes of the sensing method embodiment applied in the second network device side are implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device. The network device is a second network device and includes a processor and a communication interface, where the communication interface is configured to send at least one of a first sensing requirement and configuration information of a sensing signal to a first network device.

The network device embodiment corresponds to the foregoing network device method embodiment. All implementations in the foregoing method embodiment may be applicable to the network device embodiment, with the same technical effect achieved.

Specifically, an embodiment of this application further provides a network device. The network device is a second network device. Specifically, for a structure of the second network device, refer to the structure of the network device in FIG. 7. Details are not described herein again.

The processor invokes the instructions or program in the memory to execute the method executed by the modules shown in FIG. 9, with the same technical effects achieved. To avoid repetition, details are not described herein again.

Optionally, as shown in FIG. 10, an embodiment of this application further provides a communication device 1000 including a processor 1001, a memory 1002, and a program or instructions stored in the memory 1002 and capable of running on the processor 1001. For example, in a case that the communication device 1000 is a first network device, when the program or instructions are executed by the processor 1001, the processes of the foregoing embodiment of the sensing method are implemented, with the same technical effects achieved. In a case that the communication device 1000 is a second network device, when the program or instructions are executed by the processor 1001, the processes of the foregoing embodiment of the sensing method are implemented, with the same beneficial effects achieved. To avoid repetition, details are not described herein again.

The terminal in the embodiments of this application may be a device that provides voice and/or data connectivity for a user, a handheld device with a wireless connection function, or another processing device connected to a wireless modem. In different systems, names of terminal devices may also vary. For example, in a 5G system, a terminal device may be referred to as user equipment (User Equipment, UE). The wireless terminal device may communicate with one or more core networks (Core Network, CN) through a radio access network (Radio Access Network, RAN). The wireless terminal device may be a mobile terminal device, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless telephone set, a session initiated protocol (Session Initiated Protocol, SIP) phone, a wireless local loop (Wireless Local Loop, WLL) station, or a personal digital assistant (Personal Digital Assistant, PDA). The wireless terminal device may also be referred to as a system, a subscriber unit (subscriber unit), a subscriber station (subscriber station), a mobile station (mobile station), a mobile console (mobile), a remote station (remote station), an access point (access point), a remote terminal device (remote terminal), an access terminal device (access terminal), a user terminal device (user terminal), a user agent (user agent), or a user device (user device), which is not limited in the embodiments of this application.

The first network device in the embodiments of this application may be a base transceiver station (Base Transceiver Station, BTS) in a global system for mobile communication (Global System of Mobile communication, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (Evolutional Node B, eNB or eNodeB), a relay station, or an access point in LTE, or may be a base station in a future 5G network, or the like, which is not limited herein.

The first network device and the terminal may respectively use one or more antennas to perform multiple-input multiple-output (Multi Input Multi Output, MIMO) transmission with each other. The MIMO transmission may be single user MIMO (Single User MIMO, SU-MIMO) or multiple user MIMO (Multiple User MIMO, MU-MIMO). Depending on forms and a quantity of antenna combinations, the MIMO transmission may be two-dimensional MIMO (2D-MIMO), three-dimensional MIMO (3D-MIMO), full-dimensional MIMO (FD-MIMO), or massive MIMO (massive-MIMO), or may be diversity transmission, precoding transmission, beamforming transmission, or the like.

In addition, an embodiment of this application provides a chip. The chip includes a processor and a communication interface. The communication interface is coupled to the processor. The processor is configured to run a program or instructions to implement each process of the foregoing embodiment of the sensing method, with the same technical effect achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A sensing method, comprising:
sending, by a first network device, a sensing signal; and
detecting, by the first network device, an echo of the sensing signal based on a measurement quantity of the sensing signal, and obtaining a measurement value corresponding to the measurement quantity.

2. The method according to claim 1, wherein before the detecting, by the first network device, an echo of the sensing signal based on a measurement quantity of the sensing signal, and obtaining a measurement value corresponding to the measurement quantity, the method further comprises one of the following:
receiving, by the first network device, first indication information sent by a second network device, wherein the first indication information is used to indicate the measurement quantity of the sensing signal that the first network device needs to measure; and
determining, by the first network device, the measurement quantity of the sensing signal according to a first sensing requirement.

3. The method according to claim 1, wherein before the sending, by a first network device, a sensing signal, the method further comprises:
determining, by the first network device, configuration information of the sensing signal.

4. The method according to claim 3, wherein the determining, by the first network device, configuration information of the sensing signal comprises at least one of the following:
receiving, by the first network device, first configuration information of the sensing signal, wherein the first configuration information is sent by a second network device; and
determining, by the first network device, second configuration information of the sensing signal based on first information; wherein
the first information comprises at least one of the following:
first sensing requirement; and
first recommendation information of the configuration information, wherein the first recommendation information is determined by the second network device according to the first sensing requirement.

5. The method according to claim 3 or 4, wherein the configuration information of the sensing signal comprises at least one of the following parameters:
waveform of the sensing signal;
subcarrier spacing of the sensing signal;
guard spacing of the sensing signal;
bandwidth of the sensing signal;
burst duration of the sensing signal;
time-domain interval of the sensing signal;
signal transmission power of the sensing signal;
signal format of the sensing signal;
signal direction of the sensing signal;
time resource of the sensing signal;
frequency resource of the sensing signal; and
quasi-co-location QCL relationship of the sensing signal.

6. The method according to claim 2 or 4, wherein the first sensing requirement is sent by the second network device to the first network device.

7. The method according to claim 2 or 4, wherein the first sensing requirement is associated with at least one of the following:
sensing object;
sensing quantity; and
sensing index.

8. The method according to claim 1, wherein after the obtaining, by the first network-side device, a measurement value corresponding to the measurement quantity, the method further comprises any one of the following:
sending, by the first network-side device, the measurement quantity and the measurement value corresponding to the measurement quantity to a second network device; and
determining, by the first network-side device, a sensing result based on the measurement quantity and the measurement value corresponding to the measurement quantity, and sending the sensing result to the second network device.

9. The method according to claim 8, wherein the sensing result comprises at least one of the following:
characteristic information of a target object;
information related to a target event; and
information related to a target environment.

10. The method according to claim 2, 4, or 8, wherein the second network device comprises an access and mobility management function AMF entity or a sensing function entity; wherein
the sensing function entity satisfies at least one of the following:
coordinating and scheduling overall resources required for sensing;
calculating a sensing result;
estimating sensing accuracy;
verifying a sensing result;
supporting an immediate sensing request;
supporting a deferred sensing request;
supporting a periodic or event-triggered sensing request;
supporting cancellation of a periodic or triggered sensing behavior; and
determining a sensing mode based on second information; wherein
the second information comprises at least one of type of a sensing client, sensed quality of service QoS, sensing capability of a terminal, and sensing capability of the first network device; and
the sensing mode is associated with an entity that receives and sends a sensing signal.

11. The method according to claim 1, wherein the measurement quantity comprises at least one of the following:
first type of measurement quantity;
second type of measurement quantity;
the first type of measurement quantity comprises at least one of the following:
channel matrix H;
received signal strength indicator RSSI;
reference signal received power RSRP;
channel state information CSI;
power of each path in multipath channel;
delay of each path in multipath channel;
angle information of each path in multipath channel;
Doppler spread;
Doppler shift;
phase difference between a sensing signal received by a first antenna and a sensing signal received by a second antenna;
delay difference between a sensing signal received by a first antenna and a sensing signal received by a second antenna; and
characteristic difference between an I signal and a Q signal; and
the second type of measurement quantity comprises at least one of the following:
characteristic information of a target object;
information related to a target event; and
information related to a target environment.

12. A sensing method, comprising:
sending, by a second network device, at least one of a first sensing requirement and configuration information of a sensing signal to a first network device.

13. The method according to claim 12, further comprising:
sending, by the second network device, first indication information to the first network device; wherein
the first indication information is used to indicate a measurement quantity of the sensing signal that the first network device needs to measure.

14. The method according to claim 12, wherein the configuration information of the sensing signal comprises: first configuration information of the sensing signal; and
the first configuration information of the sensing signal is determined by the following determining method:
determining the first configuration information of the sensing signal based on third information; wherein
the third information comprises at least one of the following:
first sensing requirement;
sensing capability information sent by the first network device; and
second recommendation information of the configuration information, wherein the second recommendation information is determined by the first network device according to the first sensing requirement and sent to the second network device.

15. The method according to claim 12 or 14, further comprising:
receiving, by the second network device, the first sensing requirement from a terminal, the first network device, or a third network device side.

16. The method according to claim 12, wherein after the sending, by a second network device, first sensing information to a first network device, the method further comprises one of the following:
receiving, by the second network device, the measurement quantity of the sensing signal and a measurement value corresponding to the measurement quantity that are sent by the first network device; and
receiving, by the second network device, a sensing result sent by the first network device, wherein the sensing result is obtained by the first network device based on the measurement quantity of the sensing signal and the measurement value corresponding to the measurement quantity.

17. The method according to claim 16, wherein after the receiving, by the second network device, the measurement quantity of the sensing signal and a measurement value corresponding to the measurement quantity that are sent by the first network device, the method further comprises at least one of the following:
obtaining, by the second network device, the sensing result based on the measurement quantity and the measurement value corresponding to the measurement quantity; and
sending, by the second network device, the measurement quantity and the measurement value corresponding to the measurement quantity to a terminal or a third network device.

18. The method according to claim 17, wherein after the obtaining, by the second network device, the sensing result based on the measurement quantity and the measurement value corresponding to the measurement quantity, the method further comprises:
sending, by the second network device, the sensing result to the terminal or the third network device.

19. The method according to claim 16, wherein after the receiving, by the second network device, a sensing result sent by the first network device, the method further comprises:
sending, by the second network device, the sensing result to the terminal or the third network device.

20. A sensing apparatus is applied to a first network device, wherein the apparatus comprises:
a first sending module, configured to send a sensing signal;
a first obtaining module, configured to detect an echo of the sensing signal based on a measurement quantity of the sensing signal and obtain a measurement value corresponding to the measurement quantity.

21. A sensing apparatus applied to a second network device, wherein the sensing apparatus comprises:
a second sending module, configured to send at least one of a first sensing requirement and configuration information of a sensing signal to the first network device.

22. A network device, comprising a processor, a memory, and a program or instructions stored in the memory and capable of running on the processor, wherein when the program or the instructions are executed by the processor, the steps of the sensing methods according to any one of claims 1 to 19 are implemented.

23. A readable storage medium, where the readable storage medium stores a program or instructions, and when the program or the instructions are executed by a processor, the steps of the sensing methods according to any one of claims 1 to 19 are implemented.
